Europäisches Patentamt

European Patent Office

Office européen des brevets

(11) Veröffentlichungsnummer: **0 309 725 B1**

## EUROPÄISCHE PATENTSCHRIFT

(45) Veröffentlichungstag der Patentschrift: **04.11.92**

(51) Int. Cl.⁵: **G01L 1/16**

(21) Anmeldenummer: **88113594.1**

(22) Anmeldetag: **22.08.88**

(54) **Piezoelektrisches Kraftmessverfahren.**

(30) Priorität: **03.09.87 DE 3729409**

(43) Veröffentlichungstag der Anmeldung:
**05.04.89 Patentblatt 89/14**

(45) Bekanntmachung des Hinweises auf die
Patenterteilung:
**04.11.92 Patentblatt 92/45**

(84) Benannte Vertragsstaaten:
**BE FR GB LU NL SE**

(56) Entgegenhaltungen:
**US-A- 4 555 953**

**PATENT ABSTRACTS OF JAPAN, Band 10,
Nr. 12 (P-421)[2069], 17. Januar 1986; & JP-
A-60 169 730 (MITSUBISHI YUKA K.K.)
03-09-1985**

(73) Patentinhaber: **Nitsche, Wolfgang, Dr.-Ing.
Cranachstrasse 21/22
W-1000 Berlin 41(DE)**

(72) Erfinder: **Nitsche, Wolfgang, Dr.-Ing.
Cranachstrasse 21/22
W-1000 Berlin 41(DE)**

(74) Vertreter: **Rehberg, Elmar, Dipl.-Ing.
Postfach 3162 Am Kirschberge 22
W-3400 Göttingen(DE)**

## Beschreibung

Die Erfindung geht aus von einem Verfahren zur Messung von auf beliebig geformten Körpern wirkenden Drücken und Kräften, bei dem eine piezoelektrische Folie, die beidseitig eine Metallbeschichtung aufweist, auf den Körper aufgeklebt wird und bei dem eine Ladungsänderung der piezoelektrischen Folie in einer Auswerteeinheit ausgewertet und als Maß für die auf den Körper wirkende Kraft oder für den Druck verwendet wird. Es wird gleichzeitig eine Vorrichtung mit einer piezoelektrischen Folie, die auf einer Seite eine durchgehende Metallbeschichtung besitzt, und mit einer Auswerteeinheit zur Durchführung dieses Verfahrens aufgezeigt.

Piezoelektrische Folien sind bekannt. Sie werden vorzugsweise aus PVDF hergestellt, haben eine Dicke zwischen 10 Mikrometer und 100 Mikrometer sowie eine Standardbreite von 300 mm. Die piezoelektrische Folie ist beidseitig mit einer dünnen, etwa 1 Mikrometer dicken Metallschicht aus Aluminium, Gold oder Nickel beschichtet. Solche Folien eignen sich für die Bestimmung der auf die Folien wirkenden mechanischen Belastung, da infolge der mechanischen Belastung eine Ladungsänderung auf der Folienoberfläch stattfindet, der sogenannte piezoelektrische Effekt. Dies gilt als Maß für die Belastung.

Aus der Druckschrift Sensor 85 Transducer-Technik, Entwicklung und Anwendung, Messegelände Karlsruhe, 21.-23. Mai 1985, Konferenzunterlagen, ist es bekannt, solche piezoelektrischen Folien mit einer beidseitigen Metallbeschichtung zur Messung von Drücken und Kräften auf Körpern zu verwenden. Die piezoelektrische Folie wird auf den Körper geklebt und die Ladungsänderung der piezoelektrischen Folie aufgrund der Kraft- oder Druckeinwirkung wird einem Verstärker zugeführt. Das Verstärkerausgangssignal dient dann als Maß für die auf den Körper wirkende Kraft bzw. für den Druck. Nachteilig ist, daß die auf den Körper wirkende Kraft oder der auf den Körper wirkende Druck nur als integraler Wert über die Folienoberfläche ermittelt werden kann. Der genaue Angriffspunkt läßt sich nicht ermitteln. Dies jedoch ist bei vielen Strömungsuntersuchungen besonders wichtig. Es ist weiterhin nachteilig, daß die gleichzeitige Vermessung eines großräumigen Feldes nicht, oder nur mit erheblichem Aufwand möglich ist. Somit ist der Anwendungsbereich dieser piezoelektrischen Folien eingeschränkt.

Aus "Patent Abstracts of Japan", Band 10, Nr. 12 (P-421), [2 069] ist eine Vorrichtung zur Messung von Druckkräften und Druckverteilungen unter Verwendung von piezoelektrischer Folie bekannt. Hierbei ist in der Mitte eines symmetrischen Aufbaus eine Mehrzahl von Einzelsensoren bildenden Elektroden vorgesehen. Die Einzelsensoren sind jeweils über elektrische Verbindungen mit einer Auswerteeinheit verbunden. Beidseitig umgeben sind die Einzelsensoren von piezoelektrischer Folie, auf deren jeweils der den Sensoren abgewandten Seite durchgehende, auf Erdpotential liegende und flächig ausgebildete Schutzelektroden angeordnet sind. Ein Herstellungsverfahren für diese bekannte Vorrichtung wird in der Druckschrift nicht offenbart.

Es ist weiterhin eine piezoelektrische Folie bekannt, bei der die Metallbeschichtung nur einseitig aufgebracht ist. Die andere Seite der Folie wird mit speziellen Leiterbahnen, beispielsweise im Siebdruckverfahren, bedruckt. Mit dieser piezoelektrischen Folie ist zwar die gleichzeitige Messung an mehreren Orten möglich, sie hat jedoch den Nachteil, daß das von der piezoelektrischen Folie abgegebene Signal für den jeweiligen Ort bei gleicher Kraft-oder Druckbeanspruchung unterschiedlich ist, da die aufgedruckten Leiterbahnen unterschiedliche Schichtdicken aufweisen und somit auch unterschiedliche Leitungskapazitäten und Widerstände. Darüberhinaus sind bedruckte piezoelektrische Folien im Bereich der Leiterbahnen sehr bruchanfällig.

Mit den piezoelektrischen Folien, also sowohl mit den beidseitig beschichteten als auch mit den einseitig beschichteten und bedruckten, sind nur quantitative Messungen möglich, da die Ladungsänderung der Folien auf Kräfte in allen drei Achsen reagiert Bei superponierten Belastungen, wie sie üblicherweise auftreten, können keine Einzelkomponenten herausgefiltert werden.

Der Erfindung liegt die Aufgabe zugrunde, ein Verfahren und eine Vorrichtung aufzuzeigen, mit denen es möglich ist, einfach und schnell großräumige Feldmessungen durchzuführen ohne strukturseitige Veränderungen des Körpers vornehmen zu müssen.

Erfindungsgemäß wird dies dadurch gelöst, daß auf einer Seite der piezoelektrischen Folie unter Bildung von Einzelsensoren, die Metallbeschichtung teilweise durch einen Schleifvorgang entfernt wird, daß jeder Einzelsensor für eine elektrische Verbindung mit der Auswerteeinheit gekoppelt wird, daß die andere Seite der piezoelektrischen Folie mit der durchgehenden Metallbeschichtung als elektronischer Schirm verwendet und auf Masse gelegt wird und daß die Ladungsänderung jedes Einzelsensors als Maß für die lokale Kraft oder den lokalen Druck verwendet wird. Es wird also die bekannte, beidseitig beschichtete piezoelektrische Folie verwendet. Bei dieser Folie wird die Metallbeschichtung durch Abschleifen auf der einen Seite derart entfernt, daß an vorher bestimmten Stellen Einzelsensoren entstehen. Das Entfernen der Metallbeschichtung kann durch das Auflegen einer mechanischen Maske, die die Bereiche abdeckt, in denen die Metallbeschichtung erhalten bleiben, soll, und anschließendem Schleifvorgang erfolgen. Als Schleifmittel hat sich sehr feinkörnige Schleifpaste als besonders vorteilhaft herausgestellt. Es ist somit möglich, auf ein und derselben piezoelektrischen Folie eine Vielzahl von Einzelsensoren anzuordnen. Die Einzelsensoren liegen dabei an vorher bestimmten Orten. Die Form und die Struktur der jeweiligen Einzelsensoren ist frei wählbar. Es können so beispielsweise punktförmige als auch streifenförmige Einzelsensoren gebildet werden, je nach dem für welche Anwendung die piezoelektrische Folie bestimmt ist. Es ist somit auch möglich besonders kleine Einzelsensoren herzustellen, wodurch eine quasi punktförmige Messung möglich wird. Diese piezoelektrische Folie wird dann auf den Körper aufgeklebt und zwar so, daß die Seite der piezoelektrischen Folie mit der durchgehenden Metallbeschichtung oben zu liegen kommt, die Einzelsensoren also direkt auf dem Körper aufliegen. Der Körper kann eine weitgehend beliebige Form der Körperoberfläche haben, da die piezoelektrische Folie elastisch und flexibel ist. Jeder Einzelsensor wird über eine elektrische Verbindung mit der Auswerteeinheit gekoppelt. Der piezoelektrische Effekt jedes Einzelsensors wird entweder gleichzeitig oder nacheinander abgefragt und registriert. Aufgrund des nur sehr geringen piezoelektrischen Effektes ist die Gefahr von Fremd- oder Störeinflüssen sehr groß. Es hat sich als besonders vorteilhaft erwiesen,zur Vermeidung dieser Einflüsse die durchgehende Metallbeschichtung als elektronischen Schirm zu verwenden und auf Masse zu legen. Mit diesem Verfahren ist es erstmals möglich großräumige Kraftfelder durch die beliebig steigerbare Anzahl von Meßpunkten zu beobachten und zu vermessen,ohne dabei strukturseitige Veränderungen vornehmen zu müssen oder die Strömung zu stören. Der piezoelektrische Effekt wird dabei quasi verzögerungsfrei und ungedämpft registriert, was insbesondere für instationäre Messungen wichtig ist. Die piezoelektrische Folie mit den Einzelsensoren ist mechanisch und chemisch unempfindlich und arbeitet in einem Temperaturbereich von etwa - 40° C bis 150° C, so daß eine große Bandbreite von Anwendungsmöglichkeiten geschaffen ist. Eine externe Energieversorgung der Einzelsensoren ist nicht erforderlich.

Die piezoelektrische Folie kann auf den Körper mit einem harten Kleber aufgeklebt werden. Dies hat den Vorteil, daß die piezoelektrische Folie und damit auch die Einzelsensoren auch unter Einwirkung von Schubkräften bzw. Tangentialkräften stets ihren vorherbestimmten Ort an dem Körper behalten. Es ist weiterhin möglich, die Klebeverbindung wieder zu lösen und so die piezoelektrische Folie für weitere Messungen wieder zu verwenden.

Vorteilhaft können jeweils zwei Einzelsensoren zu einem Doppelsensor zusammengefaßt werden. Es wird dann die Laufzeit einer Störung zwischen den beiden Einzelsensoren registriert und daraus in Verbindung mit dem Sensorabstand die Geschwindigkeit berechnet. Falls erforderlich können dann mit Hilfe der Geschwindigkeit weitere Größen berechnet werden.

Die piezoelektrische Folie kann im Bereich der Doppelsensoren mit einem weichen Kleber und ansonsten mit einem harten Kleber montiert werden und die Ladungsänderung der zwei Einzelsensoren des Doppelsensors können superponiert werden. Es besteht somit die Möglichkeit, Druckkräfte von Schubkräften zu trennen und separat zu ermitteln. Aufgrund der Schubkräfte wird der eine Einzelsensor der piezoelektrischen Folie in Richtung der Schubkräfte gezogen und der andere Einzelsensor entsprechend gedrückt. Somit ist das Ausgangssignal der beiden Einzelsensoren phasenverschoben bzw. im Vorzeichen unterschiedlich. Durch Superponieren der beiden Ausgangssignale erhält man dann bei einer Addition die zweifache Druckkraft und bei einer Subtraktion die doppelte Schubkraft.

Bei der Vorrichtung, die beim Durchführen des neuen Verfahrens hergestellt wird, weist die piezoelektrische Folie auf der der Metallbeschichtung gegenüberliegenden Seite eine Vielzahl von Einzelsensoren auf, wobei eine elektrische Verbindung von jedem Einzelsensor zu der Auswerteeinheit vorgesehen ist und an der Metallbeschichtung ein Masse-anschluß angeordnet ist. Die piezoelektrische Folie weist also viele Einzelsensoren auf, die entsprechend den jeweiligen Anforderungen verschiedene Größen, Struktur und Lage haben können. Als elektrische Verbindung kann Platindraht vorgesehen sein, wobei der Platindraht mit Hilfe eines elektrisch leitenden Klebers an die Einzelsensoren angeklebt ist. Die Verwendung des Klebers garantiert eine sichere Verbindung zwischen dem Einzelsensor und dem Platindraht. Die Herstellung der Verbindung ist dabei einfach und genau durchführbar. Es hat sich herausgestellt, daß es besonders vorteilhaft ist, eine Dicke des Platindrahtes von 50 Mikrometern zu wählen und den Platindraht in der Kleberschicht zwischen dem Körper und der piezoelektrischen Folie zu verlegen. Es treten somit keine Störungen in der Strömung auf und trotz allem ist eine sichere Übertragung des Ausgangssignals des Einzelsensors gegeben. Es kann nur eine Auswerteeinheit für alle Einzelsensoren vorgesehen sein, wobei dann vor der Auswerteeinheit ein Umschalter zum Umschalten von dem einen Einzelsensor zu dem anderen angeordnet ist. Dies birgt zwar den Nachteil, daß nicht alle Ausgangssignale der Einzelsensoren gleichzeitig erfaßt werden können, hat aber den Vorteil, daß ein wesentlich geringerer apparativer Aufbau notwendig ist. Durch den Umschalter ist trotz allem ein schneller Meßablauf möglich. Die Auswerteeinheit kann vorzugsweise einen ladungsempfindlichen Verstärker oder einen spannungsempfindlichen Verstärker mit gesteigertem Eingangswiderstand aufweisen. Der Eingangswiderstand des spannungsempfindlichen Verstärkers sollte dabei zwischen 80 Megaohm und $10^5$ Megaohm liegen. Es ergibt sich dadurch eine sehr gute Übereinstimmung zwischen dem Verlauf des aufgebrachten Druckes oder der aufgebrachten Kraft auf die piezoelektrische Folie und dem Ausgangssignal aus dem Verstärker. Im Gegensatz dazu liefert ein handelsüblicher Breitbandverstärker mit einem relativ niedrigem Eingangswiderstand von etwa 1 Megaohm nur in etwa den differenziellen Wert der Belastung der piezoelektrischen Folie. Dies ist mit dem nur recht kleinen piezoelektrischen Ausgangssignal der piezoelektrischen Folie sowie des hohen Durchgangswiderstandes von etwa 5 $\cdot$ $10^8$ Megaohm cm zu erklären.Letztendlich wird jedoch die Wahl des Verstärkers von dem jeweiligen Meßproblem abhängen. Dabei ist insbesondere die untere Grenzfrequenz ausschlaggebend: Bei Messung hochfrequenter. Druck- oder Kraftschwankungen können bereits spannungsempfindliche Verstärker hinreichende Ergebnisse liefern, während bei quasi-statischen Messungen ladungsempfindliche Verstärker die Qualität der Ergebnisse erheblich verbessern.

Die Erfindung wird anhand von Ausführungsbeispielen weiter beschrieben. Es zeigen:

Fig. 1    eine schematsche Draufsicht auf einen mit einer piezoelektrischen Folie versehenen Körper;

Fig. 2    eine Draufsicht auf die piezoelektrische Folie;

Fig. 3    einen Schnitt gemäß III-III in Fig. 2;

Fig. 4    eine weitere Ausführungsform der Einzelsensoren;

Fig. 5    einen Doppelsensor zur Trennung von Druck- und Schubkräften; und

Fig. 6    ein mechanisches Ersatzmodell des Doppelsensors gemäß Fig. 5

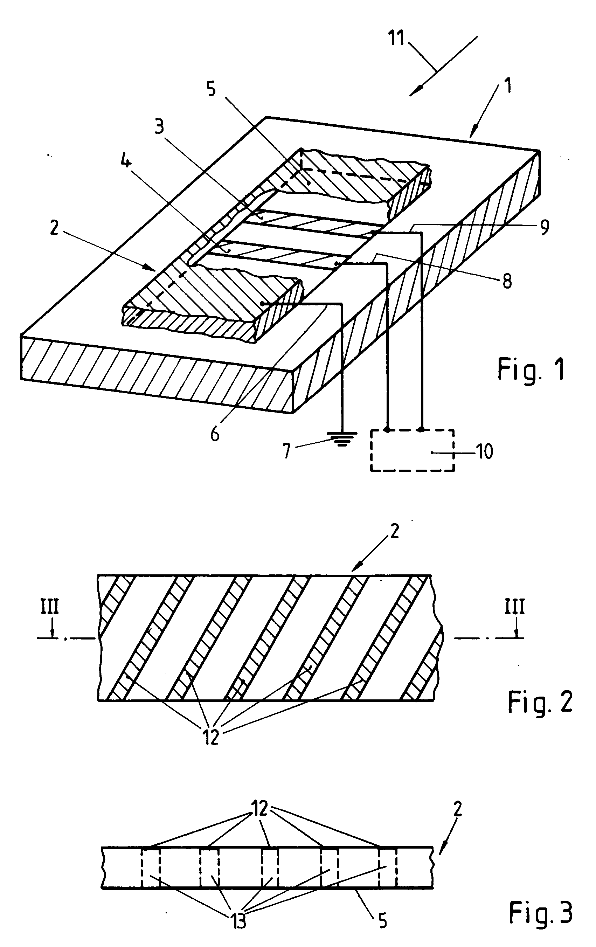

Fig. 1 zeigt einen Körper 1, auf dem eine piezoelektrische Folie 2 aufgebracht ist. Die piezoelektrische Folie 2 weist zwei Einzelsensoren 3 und 4 auf. Die Einzelsensoren 3 und 4 können eine beliebige Gestalt haben, die dem entsprechenden Meßvorhaben angepaßt ist. Es sind natürlich auch mehr als die zwei hier dargestellten Einzelsensoren 3 und 4 möglich. Auf der den Einzelsensoren 3 und 4 gegenüberliegenden Seite ist auf der piezoelektrischen Folie 2 eine Metallbeschichtung 5 angebracht. Die Metallbeschichtung 5 ist über die Leitung 6 auf Masse 7 gelegt. Eine elektrische Verbindung 8 und eine elektrische Verbindung 9 verbinden die Einzelsensoren 3 und 4 mit einer hier nicht weiter dargestellten Auswerteinheit 10.

Aufgrund einer auf den Körper 1 wirkenden Kraft bzw. Kraftverteilung wird in den Bereichen der Einzelsensoren 3 und 4 eine piezoelektrische Spannung erzeugt, die über die elektrischen Verbindungen 8 und 9 der Auswerteeinheit 10 zugeführt wird. Die piezoelektrische Spannung ist proportional der auf den Körper 1 einwirkenden Kraft. Die elektronische Abschirmung der piezoelektrischen Folie 2 erfolgt durch die Metallbeschichtung 5, die über die Leitung 6 auf die Masse 7 gelegt ist. Aufgrund der bekannten Lage der Einzelsensoren 3 und 4 ist der Kraftangriffspunkt bekannt. Die beiden hier dargestellten Einzelsensoren 3 und 4 weisen eine längliche Erstreckung auf und können beispielsweise für eine Geschwindigkeitsmessung eines in Richtung eines Pfeils 11 strömenden Mediums verwendet werden. Dabei wird eine durch das Strömungsmedium hervorgerufene Störung von dem Einzelsensor 3 registriert und nach einem gewissen Zeitabstand auch von dem Einzelsensor 4. Die Strömungsgeschwindigkeit ergibt sich dann aus dem bekannten Abstand der Einzelsensoren 3 und 4 bezogen auf die Zeit, die die Störung benötigt, um diesen Abstand zurückzulegen. Für punktförmige Messungen eignen sich diese Einzelsensoren 3 und 4 nicht, da die piezoelektrische Spannung die Integration der auf den jeweiligen Einzelsensor 3 oder 4 wirkenden Kraft proportional ist. Sollen punktförmige Messungen durchgeführt werden, so kann die piezoelektrische Folie 2 derart bearbeitet werden, daß sich die Einzelsensoren 3 und 4 als kleine Kreise mit nur geringer Erstreckung darstellen. Die piezoelektrische Folie 2 kann also den jeweiligen Meßbedingungen ideal angepaßt werden, indem die Einzelsensoren 3 und 4 durch teilweises Entfernen der Metallbeschichtung in beliebiger Form und Anzahl hergestellt werden können.

Fig. 2 zeigt die Draufsicht auf die piezoelektrische Folie 2 auf der mehrere Einzelsensoren 12 angeordnet sind. Die Einzelsensoren haben auch hier eine längliche Erstreckung. Solch eine piezoelektrische Folie 2 mit Einzelsensoren 12 kann beispielsweise dazu benutzt werden, den Umschlagpunkt von laminarer Strömung zu turbulenter Strömung auf einem Flügel festzustellen. Dabei ist es wichtig, die Änderungen der Druckschwankungen parallel zur Flügelvorderkante zu messen. Diese Messung erfolgt dann mit den Einzelsensoren 12.

Fig. 3 zeigt eine Schnittdarstellung durch die piezoelektrische Folie 2 entsprechend Fig. 2. Hier ist noch einmal deutlich die Metallbeschichtung 5 auf der einen Seite der piezoelektrischen Folie 2 und die auf der gegenüberliegenden Seite angeordneten Einzelsensoren 12 zu sehen. Es werden Bereiche 13 gebildet, die auf der einen Seite der pizoelektrischen Folie 2 von den Einzelsensoren 12 und auf der anderen Seite von der Metallbeschichtung 5 begrenzt werden. Nur in diesen Bereichen 13 wird der piezoelektrische Effekt wirksam, so daß nur die auf den Einzelsensoren 12 wirkenden Drükke oder Kräfte registriet werden.

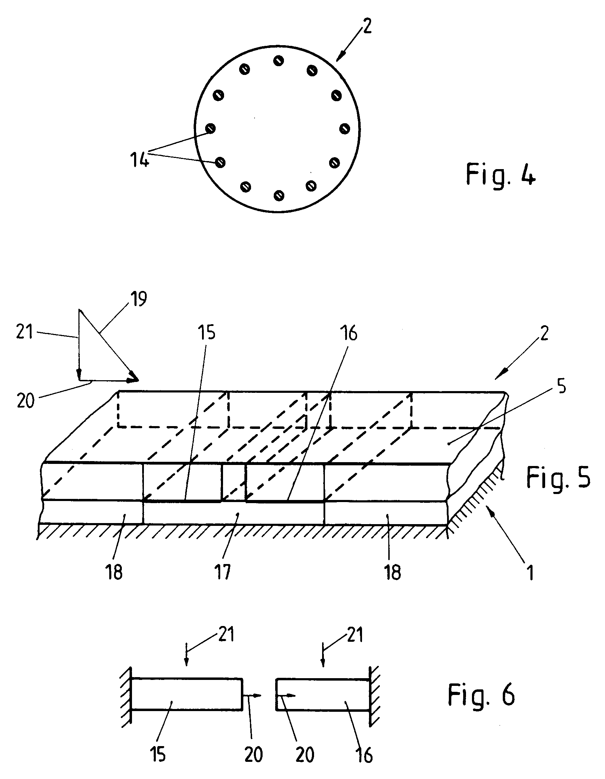

Fig. 4 zeigt eine weitere Ausführungsform der piezoelektrischen Folie 2 mit Einzelsensoren 14. Diese piezolelektrische Folie 2 eignet sich besonders gut für punktförmige Messungen. Es ist natürlich auch möglich, streifenförmige Einzelsensoren 12, siehe Fig. 2, und punktförmige Einzelsensoren 14 auf ein und derselben piezoelektrischen Folie 2 zu kombinieren. Die Größe der Einzelsensoren 14 liegt im Bereich von 1mm$^2$.

Fig. 5 zeigt die piezoelektrische Folie 2, auf der zwei Einzelsensoren 15 und 16 angeordnet sind. Im Bereich der Einzelsensoren 15 und 16 ist die piezoelektrische Folie 2 mit einem weichen Kleber 17, und beidseitig der Einzelsensoren 15 und 16 mit einem harten Kleber 18 auf dem Körper 1 befestigt. Diese piezoelektrische Folie 2 kann immer dann eingesetzt werden, wenn auf den Körper überlagerte Kräfte wirken und die einzelnen Kraftkomponenten bestimmt werden sollen. Wirkt eine Kraft 19 auf die piezoelektrische Folie 2, d.h. auf die Einzelsensoren 15 und 16, so werden prinzipiell sowohl die Tangentialkomponente der Kraft 19 als auch die Normalkomponente, also eine Tangentialkraft 20 und eine Normalkraft 21, in eine proportionale Spannung umgewandelt. Bei der hier vorliegenden piezoelektrischen Folie 2 wird der Einzelsensor 15 in Richtung der Tangentialkraft 20 bzw. der Schubkraft gezogen. Der Einzelsensor 16 dagegen wird in derselben Richtung gedrückt.

Fig. 6 verdeutlicht diesen Vorgang anhand eines mechanischen Ersatzmodells. Die Einzelsensoren 15 und 16 sind jeweils auf einer Seite und zwar jeweils auf einer anderen fest eingespannt. Auf die Einzelsensoren 15, 16 wirkt dieselbe Normalkraft 21. Aufgrund der Tangentialkraft 20, die ebenfalls in gleicher Richtung und Größe auf die Einzelsensoren 15 und 16 einwirkt, wird der Einzelsensor 15 in Richtung der Tangentialkraft 20 gezogen und der Einzelsensor 16 in Richtung der Tangentialkraft 20 gedrückt. Somit weist die Spannung der piezoelektrischen Folie 2 des Einzelsensors 16 ein anderes Vorzeichen auf, als die Spannung des Einzelsensors 15, währenddessen der Betrag der Spannung der Einzelsensoren 15 und 16, gleich ist. Durch Superponieren der Spannungen des Einzelsensors 15 und des Einzelsensors 16 können nun die Normalkraft 21 und die Tangentialkraft 20 als Komponente der Kraft 19 einzeln ermittelt werden. Die Addition der Spannung des Einzelsensors 15 mit der des Einzelsensors 16 ergibt dann die doppelte Normalkraft 21 und die Subtraktion die doppelte Tangentialkraft 20.

**Bezugzeichenliste:**

| | | |
|---|---|---|
| 1 | = | Körper |
| 2 | = | piezoelektrische Folie |
| 3 | = | Einzelsensor |
| 4 | = | Einzelsensor |
| 5 | = | Metallbeschichtung |
| 6 | = | Leitung |
| 7 | = | Masse |
| 8 | = | elektronische Verbindung |
| 9 | = | elektronische Verbindung |
| 10 | = | Auswerteeinheit |
| 11 | = | Pfeil |
| 12 | = | Einzelsensor |
| 13 | = | Bereich |
| 14 | = | Einzelsensor |
| 15 | = | Einzelsensor |
| 16 | = | Einzelsensor |
| 17 | = | weicher Kleber |
| 18 | = | harter Kleber |
| 19 | = | Kraft |
| 20 | = | Tangentialkraft |
| 21 | = | Normalkraft |

**Patentansprüche**

1. Verfahren zur Messung von auf beliebig geformten Körpern wirkenden Drücken und Kräften, bei dem eine piezoelektrische Folie, die beidseitig eine Metallbeschichtung aufweist, auf den Körper aufgeklebt wird und bei dem eine Ladungsänderung der piezoelektrischen Folie in einer Auswerteeinheit ausgewertet und als Maß für die auf den Körper wirkende Kraft oder für den Druck verwendet wird, dadurch gekennzeichnet, daß auf einer Seite der piezoelektrischen Folie (2) unter Bildung von Einzelsensoren (3, 4, 14, 15, 16) die Metallbeschichtung (5) durch einen Schleifvorgang teilweise entfernt wird, daß jeder Einzelsensor (3, 4, 14, 15, 16) über eine elektrische Verbindung (8) mit der Auswerteeinheit (10) gekoppelt wird, daß die andere Seite der piezoelektrischen Folie (2) mit der durchgehenden Metallbeschichtung (5) als elektronischer Schirm verwendet und auf Masse (7) gelegt wird und daß die Ladungsänderung jedes Einzelsensors (3, 4, 14, 15, 16) als Maß für die lokale Kraft (19) oder den lokalen Druck verwendet wird.

2. Verfahren nach Anspruch 1, dadurch gekennzeichnet, daß die piezoelektrische Folie (2) auf den Körper (1) mit einem harten Kleber (18) aufgeklebt wird.

3. Verfahren nach Anspruch 1, dadurch gekennzeichnet, daß jeweils zwei Einzelsensoren (3, 4; 15, 16) zu einem Doppelsensor zusamengefaßt werden.

**4.** Verfahren nach Anspruch 1 und 3, dadurch gekennzeichnet, daß die piezoelektrische Folie (2) im Bereich der Doppelsensoren mit einem weichen Kleber (17) und ansonsten mit einem harten Kleber (18) montiert wird, und daß die Ladungsänderung der zwei Einzelsensoren (3, 4; 15, 16) des Doppelsensors superponiert werden.

## Claims

**1.** A method of measuring pressures and forces acting on arbitrarily shaped bodies, in which a piezoelectric film, having a metal coating on both sides, is bonded onto the body, and in which a charge variation of the piezoelectric film is evaluated in an evaluation unit, and employed as measure for the force acting on the body or for the pressure, characterized in, that the metal coating is partially removed from one side of the piezoelectric film by a abrasion process to form individual sensors, that each individual sensor is coupled to the evaluation unit via an electrical connection, that the other side of the piezoelectric film having the continuous metal coating is employed as electronic shield and connected to earth, and that the charge variation of each individual sensor is employed as measure for the local force or the local pressure.

**2.** The method according to claim 1, characterized in, that the piezoelectric film (2) is bonded onto the body (1) with a hard bonding agent (18).

**3.** The method according to claim 1, characterized in, that in each case two individual sensors (3, 4; 15, 16) are combined to form a double sensor.

**4.** The method according to claim 1 and 3, characterized in, that the piezoelectric film (2) is mounted with a soft bonding agent (17) in the region of the double sensors and with a hard bonding agent (18) otherwise and that the charge variation of the two individual sensors (3, 4; 15, 16) of the double sensors are superimposed.

## Revendications

**1.** Procédé de mesure de pressions et de forces agissant sur des corps de forme quelconque, dans lequel un film piézoélectrique présentant sur ses deux faces un revêtement métallique est collé sur le corps, et dans lequel un changement de charge du film piézoélectrique est exploité dans une unité d'exploitation et est utilisé en tant que mesure de la force ou de la pression agissant sur le corps, **caractérisé** en ce que, sur une face du film piézoélectrique (2), le revêtement métallique (5) est partiellement enlevé par meulage en donnant lieu à la formation de capteurs individuels (3, 4, 14, 15, 16); en ce que chaque capteur individuel (3, 4, 14, 15, 16) est relié par une liaison électrique à l'unité d'exploitation (10); en ce que l'autre face du film piézoélectrique (2) avec le revêtement métallique (5) continu est utilisée comme écran électronique et est mise à la masse (7), et en ce que le changement de charge de chaque capteur individuel (3, 4, 14, 15, 16) est utilisé en tant que mesure de la force locale (19) ou de la pression locale.

**2.** Procédé selon la revendication 1, caractérisé en ce que le film piézoélectrique (2) est collé sur le corps (1) avec un adhésif dur (18).

**3.** Procédé selon la revendication 1, caractérisé en ce que deux capteurs individuels (3, 4; 15, 16) sont chaque fois groupés en un capteur double.

**4.** Procédé selon les revendications 1 et 3, caractérisé en ce que le film piézoélectrique (2) est monté dans la région du capteur double avec un adhésif tendre (17) et ailleurs avec un adhésif dur (18), et en ce que les changements de charge des deux capteurs individuels (3, 4; 15, 16) du capteur double sont superposés.

Fig. 1

Fig. 2

Fig. 3

Fig. 4

Fig. 5

Fig. 6